# EUROPÄISCHE PATENTSCHRIFT

(11) **EP 0 476 005 B1**
(45) Veröffentlichungstag und Bekanntmachung des Hinweises auf die Patenterteilung: **24.08.1994**
(21) Anmeldenummer: 90908938.5
(22) Anmeldetag: 05.06.1990
(51) Int. Cl.: F16H 63/36

(54) **SCHALTEINRICHTUNG EINES KRAFTFAHRZEUGGETRIEBES**
GEAR CHANGE DEVICE FOR THE GEARBOX OF A MOTOR VEHICLE
DISPOSITIF DE CHANGEMENT DE VITESSES POUR LA BOITE DE VITESSES DE VEHICULES A MOTEUR

(30) Priorität: 10.06.1989 DE 3919100
(43) Veröffentlichungstag der Anmeldung: 25.03.1992
(73) Patentinhaber: ZF FRIEDRICHSHAFEN Aktiengesellschaft, 88038 Friedrichshafen (DE)
(72) Erfinder: NITZSCHKE, Rüdiger, D-7990 Friedrichshafen (DE); SCHETTER, Martin, D-7070 Schwäbisch Gmünd (DE)
(86) Internationale Anmeldenummer: EP9000879
(87) Internationale Veröffentlichungsnummer: WO9015272

(56) Entgegenhaltungen:
- DE-A- 2 015 105
- DE-A- 2 125 278
- GB-A- 774 824
- GB-A- 1 031 400
- US-A- 3 242 759

## Beschreibung

Die Erfindung bezieht sich auf eine Schalteinrichtung eines Kraftfahrzeuggetriebes mit mehr als zwei in Schiebemuffen eingreifenden gabelförmigen Schaltelementen, vorzugsweise Schaltschwingen, welche über zumindest eine Schaltwelle um parallele Schwenklager aus ihrer Neutralstellung in Schaltstellungen verschwenkbar sind, wobei ortsfest im Getriebegehäuse angeordnete Verriegelungsmittel derart mit Verriegelungsnuten, die in an den Schaltschwingen befestigten Verriegelungsschwingen ausgebildet sind, zusammenwirken, daß bei Verschwenkung einer Schaltschwinge in eine Schaltstellung die übrigen Schaltschwingen in ihrer Neutralstellung verriegelt sind.

Eine Schalteinrichtung der vorgenannten Gattung ist bekannt aus der DE-A-2 125 278. Dabei sind in einem zentralen Kugelkäfig um 120° versetzt zueinander drei Kugeln angeordnet, die von gabelförmig ausgebildeten Endabschnitten der Verriegelungsschwingen übergriffen werden. Wird eine Schaltschwinge um ihr Schwenklager verschwenkt, so verschiebt der gabelförmige Endabschnitt der mit der Schaltschwinge verbundenen Verriegelungsschwinge die in dessen Kerbe liegende Kugel im Kugelkäfig. Dadurch drückt sie die beiden anderen Kugeln in die gabelförmigen Enden der übrigen Verriegelungsschwingen. Ein derartiges Verriegelungssystem ist nur begrenzt anwendbar, da die Schwenkachsen der Schaltschwingen in einer bestimmten Lage zu dem Kugelkäfig möglichs symmetrisch angeordnet sein müssen, da ansonsten komplizierte zusätzliche Übertragungselemente erforderlich sind.

Ferner ist aus der GB-A-774 824 eine Schalteinrichtung mit zwei Schaltungen bekannt, die um parallele Schwenklager schwenkbar sind, um die Schaltmuffen in die Schaltstellung zu bringen. Ein zweiarmiger Kipphebel, der um das parallel zu den Schwenklagern der Schaltschwingen angeordnete Lager schwenkbar ist, greift mit seinen einseitig angeordneten Sperrnocken in die Verriegelungsnuten ein.

Der Erfindung liegt daher die Aufgabe zugrunde, ein aus Verriegelungsmitteln und Verriegelungsnuten bestehendes System zu schaffen, das für unterschiedliche Getriebekonfigurationen bei Verwendung möglichst gleicher und einfacher Bauteile und für mehr als zwei zueinander verriegelbaren Schaltelementen verwendbar ist.

Diese Aufgabe wird nach dem kennzeichnenden Teil des Anspruchs 1 dadurch gelöst, daß zwischen den Schaltschwingen jeweils ein parallel zum Schwenklager im Getriebegehäuse gelagerter zweiarmiger Kipphebel angeordnet ist, der über endseitige Sperrnocken in die Verriegelungsnuten eingreift.

Wird eine der beiden Schaltschwingen aus ihrer Neutralstellung in eine Schaltendstellung bewegt, so verläßt an dieser Schaltschwinge der Sperrnocken die Verriegelungsnut, und der Kipphebel übt mit seinem an dem anderen Schenkel angeordneten Sperrnocken in der gegenüberliegenden Schaltschwinge seine Sperrwirkung aus.

Die einander zugewandten Schenkel der Kipphebel sind auch mittels Übertragungsglieder miteinander verbunden gemäß Kennzeichen des Anspruchs 1.

Wird an einer Schaltschwinge eine Schaltung ausgeführt, so sperrt der entsprechende Kipphebel nicht nur die gegenüberliegende Schaltschwinge; das Übertragungsglied überträgt die Bewegung des Kipphebels auf zumindest einen weiteren Kipphebel, der in die ihm zugeordnete Verriegelungsnut eingreift. Über die Übertragungsglieder läßt sich somit das Verriegelungsystem auf mehrere Schaltschwingen oder Schaltschwingenpaare erweitern.

Die Verriegelungseinrichtung kann mit geringem baulichen Aufwand und Raumbedarf realisiert werden. Darüber hinaus besteht selbstverständlich aber auch die Möglichkeit, die Erfindung bei Schaltgabeln anzuwenden, die über Schaltschienen längsverschiebbar sind. In diesem Fall ist an jeder Schaltgabel ein Verriegelungsnuten aufweisendes Verriegelungselement angeordnet.

Weitere erfindungsgemäße Ausgestaltungen sind in den Unteransprüchen 2 bis 7 beschrieben.

Nach Anspruch 2 soll die Verriegelungsschwinge einer Schaltschwinge, an der zwei Kipphebel angreifen, zwei gegenläufige Verriegelungsnuten aufweisen. Es handelt sich dabei um die Schaltschwingen, die innerhalb einer Reihenanordnung von Kipphebeln liegen. Wird eine derartige Schaltschwinge betätigt, so sperren die beiden Kipphebel durch eine gegenläufige Bewegung die beiden jeweils benachbarten Schaltschwingen. Über die Schenkel dieser in gegenläufige Verriegelungsnuten eingreifenden Kipphebel können in vorteilhafter Weise die Übertragungsglieder so angeordnet werden, so daß eine Reihenschaltung der Kipphebel realisierbar ist.

In den Ansprüchen 3 und 4 wird für derartige nach Anspruch 2 ausgebildete Verriegelungsschwingen vorgeschlagen, die Verriegelungsnuten beiderseits oder einerseits des Schwenklagers der Schaltschwinge anzuordnen. Die entsprechende Ausbildung der Verriegelungsschwinge als einarmiger oder zweiarmiger Hebel richtet sich nach den räumlichen Gegebenheiten.

In einer weiteren Ausgestaltung der Erfindung nach Anspruch 5 soll das Übertragungsglied als eine an den beiden einander zugewandten Schenkeln der beiden Kipphebel angelenkte Schubstange ausgebildet sein. Die Schubstange als einfaches mechanisches Bauteil überträgt dabei die Schwenkbewegung des einen Kipphebels auf den anderen Kipphebel, wobei innerhalb der Reihe von Kipphebeln sich, abgesehen von der jeweils geschalteten Schaltschwinge, jeweils ein Schaltnocken an jeder Schaltschwinge im Eingriff befindet. Dabei soll nach Anspruch 6 die Schubstange an zumindest einem der Schenkel über ein Langloch befestigt sein. Dieses Langloch ist erforderlich, damit bei Betätigung dieser Schaltschwinge die paarweise in die einander gegenüberliegenden Verriegelungsnuten eingreifenden Sperrnocken verdrängt werden können.

Gemäß Anspruch 7 soll die Schubstange über ein Langloch am Schwenklager der mittleren Schaltschwinge geführt sein. Auf diese Weise bleibt an der Schubstange, die über Nieten mit den Kipphebeln verbunden ist, der Freigang in Längsrichtung erhalten, während die Schubstange in Querrichtung nicht schwingen kann.

Zur weiteren Erläuterung der Erfindung wird auf die Zeichnung verwiesen, in der zwei Ausführungsbeispiele vereinfacht dargestellt sind. Es zeigen
- Fig. 1: eine Teilansicht eines Kraftfahrzeuggetriebes im Längsschnitt, bei welchem zwischen Schaltschwingen beiderseits von deren Schwenklagern Kipphebel angeordnet sind,
- Fig. 2: als Einzelteil aus der Anordnung nach Fig. 1 zwei Kipphebel, deren Schenkel über eine Schubstange miteinander verbunden sind und
- Fig. 3: eine Teilansicht einer weiteren Ausführungsform der erfindungsgemäßen Verriegelungseinrichtung, bei der Verriegelungsnuten einer mittleren Schaltschwinge einerseits des Schwenklagers der Schaltschwinge angeordnet sind.

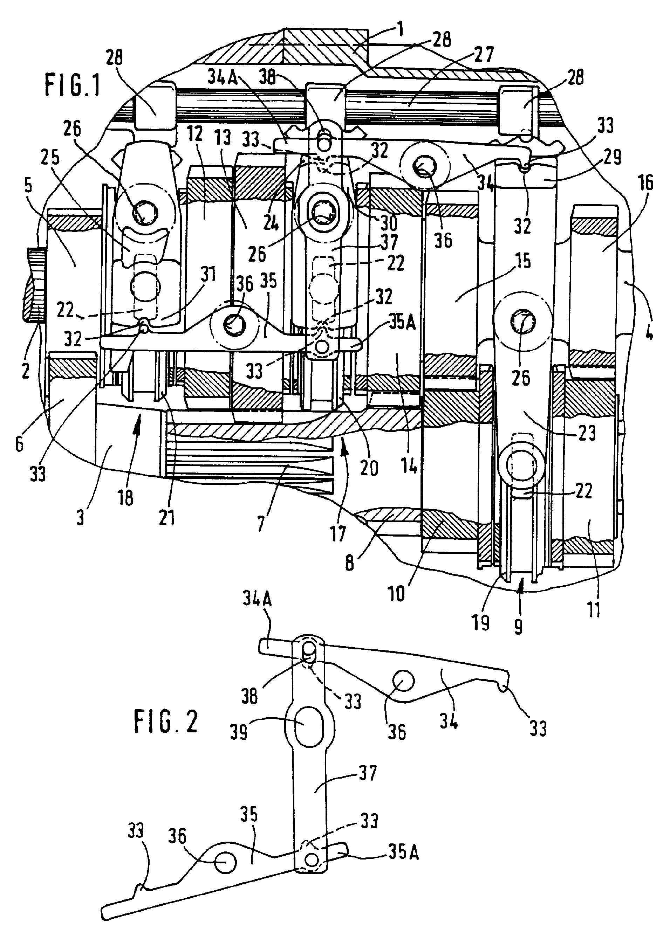

In der Fig. 1 ist mit 1 ein Getriebegehäuse eines Kraftfahrzeuggetriebes bezeichnet, in dem eine Eingangswelle 2, eine Vorgelegewelle 3 und eine Abtriebswelle 4 gelagert sind. Mit der Eingangswelle 2 ist ein Zahnrad 5 drehfest verbunden, das sich im ständigen Eingriff mit einem drehfest mit der Vorgelegewelle 3 drehfest verbundenen Zahnrad 6 befindet. Weiterhin weist die Vorgelegewelle 3 drehfeste Zahnräder 7 und 8 sowie frei drehbar und mittels einer Schaltkupplung 9 mit ihr kuppelbare Zahnräder 10 und 11 auf. Die Abtriebswelle 4 ist koaxial zu Eingangswelle 2 angeordnet, wobei auf der Abtriebswelle 4 frei drehbar und mit ihr kuppelbar die Zahnräder 12, 13 und 14 angeordnet sind. Weitere Zahnräder 15 und 16 sind drehfest mit der Abtriebswelle 4 verbunden.

Eine Schaltkupplung 17 verbindet in einer linken Stellung das Zahnrad 13 mit der Abtriebswelle 4, wodurch eine erste Gangstufe geschaltet ist. In seiner rechten Stellung verbindet die Schaltkupplung 17 das Zahnrad 14 mit der Abtriebswelle 4, und die zweite Gangstufe ist geschaltet. Die Schaltkupplung 9 kuppelt in ihrer linken Stellung das Zahnrad 10 an die Vorgelegewelle 3, so daß die dritte Gangstufe eingeschaltet ist. Die vierte Gangstufe wird durch eine Verschiebung der Schaltkupplung 9 in ihre rechte Position bewirkt, wobei das Zahnrad 11 drehfest mit der Vorgelegewelle 3 verbunden ist.

Schließlich ermöglicht eine Schaltkupplung 18 die Schaltung des Kraftfahrzeuggetriebes in seine fünfte Gangstufe und in einen Rückwärtsgang. In der fünften Gangstufe wird die Schaltkupplung 18 nach links bewegt, so daß Eingangswelle 2 und Abtriebswelle 4 unmittelbar aneinander gekuppelt sind. In der Rückwärtsgangstufe nimmt die Schaltkupplung 18 ihre rechte Position ein, so daß das Rückwärtsgangrad 12, das über ein nicht näher dargestelltes Umkehrrad von dem Zahnrad 7 der Vorgelegewelle 3 angetrieben wird, mit der Abtriebswelle 4 drehfest verbunden ist.

Die Schaltkupplungen 9, 17 und 18 weisen Schiebemuffen 19, 20 und 21 auf. An diesen Schiebemuffen greifen radial Gleitsteine 22 an, die ihrerseits drehbar an Schaltschwingen 23, 24 und 25 der einzelnen Schaltkupplungen 9, 17 und 18 gelagert sind. Die als zweiarmige Hebel ausgebildeten Schaltschwingen 23, 24 und 25 sind im Getriebegehäuse 1 an Schwenklagern 26 geführt und selektiv über eine zentrale Wähl- und Schaltwelle 27 verschwenkbar. Die Wähl- und Schaltwelle 27 weist Schaltfinger 28 auf, die bei einer bestimmten Verdrehung der Wähl- und Schaltwelle 27 in eine der Schaltschwingen 23 bis 25 eingreifen und bei einer anschließenden Axialbewegung der Wähl- und Schaltwelle 27 diese angewählte Schaltschwinge 23 bis 25 verschwenken. Es ist sicherzustellen, daß stets nur eine der Schaltkupplungen 9, 17 oder 18 betätigt wird und daß die übrigen Schaltkupplungen bei deren Betätigung in ihrer Neutralstellung verriegelt sind.

Zu diesem Zweck sind an den Schaltschwingen 23 bis 25 jeweils Verriegelungsschwingen 29, 30 und 31 angeordnet. Die Verriegelungsschwingen 29 bis 31 weisen jeweils eine Verriegelungsnut 32 auf, in welche über Sperrnocken 33 Kipphebel 34 und 35, die als zweiarmige Hebel ausgebildet sind, eingreifen. Schwenkachsen 36 der Kipphebel verlaufen parallel zu den Schwenklagern 26 der Schaltschwingen 23 bis 25.

Auf der mittleren Schaltschwinge 17 befinden sich beiderseits deren Schwenklager 26 Verriegelungsschwingen 30 und 30A, wobei Verriegelungsnuten 32 dieser Verriegelungsschwingen 30 und 30A gegenläufig ausgebildet sind. Der Kipphebel 34 greift mit dem Sperrnocken 33 eines Schenkels 34A in die Verriegelungsnut 32 der Verriegelungsschwinge 30 ein, während der Kipphebel 35 mit seinem am Schenkel 35A angeordneten Sperrnocken 33 in die Verriegelungsnut 32 der Verriegelungsschwinge 30A eingreift. Die Schenkel 34A und 35A der beiden Kipphebel 34 und 35 sind über eine Schubstange 37 miteinander verbunden, wobei diese Schubstange am Schwenklager 26 der Schaltschwinge 24 geführt ist. Die Schubstange weist an ihrer Verbindung mit dem Kipphebel 34 ein Langloch auf.

Der Fig. 2 sind als Einzelteile die beiden Kipphebel 34 und 35, deren Schenkel 34A und 35A über die Schubstange 37 miteinander verbunden sind, zu entnehmen. Die Befestigung der Schubstange 37 am Schwenklager 26 erfolgt, wie weiterhin erkannt werden kann, über ein Langloch 39.

Die Funktion der Einrichtung nach den Fig. 1 und 2 ist folgende:
Wird beispielsweise die Schaltschwinge 24 zur Schaltung der ersten oder zweiten Gangstufe betätigt, so werden die Sperrnocken 33 aus den einander gegenübeliegenden Verriegelungsnuten 32 herausbewegt und die beiden Kipphebel 34 und 35 schwenken um ihre Schwenkachsen 36 und verriegeln mit ihren jeweils gegenüberliegenden Sperrnocken 33 die Schaltschwingen 23 und 25. Eine derartige gegenläufige Bewegung der Kipphebel 34 und 35 wird dadurch ermöglicht, daß die Schubstange 37 zum einen am Schenkel 34A über das Langloch 38 befestigt ist und daß mittels des weiteren Langlochs 39 Ausgleichsbewegungen der Schubstange 37 ermöglicht werden.
Wird beispielsweise die Schaltkupplung 18 über die Schaltschwinge 25 verschoben, so gelangt an der Verriegelungsschwinge 31 der Sperrnocken 33 aus der Verriegelungsnut 32, woraufhin dieser Kipphebel 35 in eine Eingriffsstellung seines gegenüberliegenden Sperrnockens 33 in die Verriegelungsnut 32 der Verriegelungsschwinge 30 verschwenkt wird. Die Schubstange 37 überträgt diese Bewegung des Schenkels 35a auf den Schenkel 34A des weiteren Kipphebels 34. Dieser Kipphebel 34 schwenkt um seine Schwenkachse 36 und verriegelt mittels seines Sperrnockens 33 die Verriegelungsschwinge 29 der Schaltschwinge 23. Bei der Verwendung dieser erfindungsgemäßen Verriegelungseinrichtung besteht weitgehende Freiheit in der Anordnung der Schaltkupplungen. Das Verriegelungssystem, das sich auf eine größere Anzahl von Schaltkupplungen erweitern läßt, kann aus einer großen Anzahl von Gleichteilen bestehen, so daß die Fertigungskosten insgesamt relativ niedrig sind.

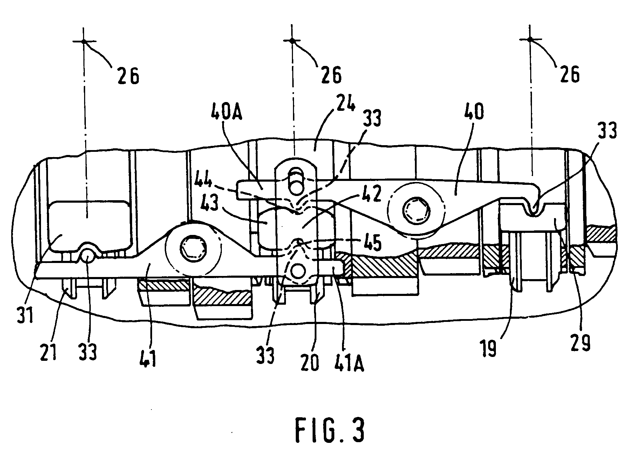

Das Ausgestaltungsbeispiel in Fig. 3 stimmt im wesentlichen mit dem der Fig. 1 überein, wobei allerdings Kipphebel 40 und 41 einerseits des Schwenklagers 26 der Schaltschwinge 24 angeordnet sind. Schenkel 40A und 41A der beiden Kipphebel 40 und 41 sind über eine relativ kurze Schubstange 42 miteinander verbunden. In entsprechender Weise sind an einer mit der Schaltschwinge 23 verbundenen Verriegelungsschwinge 43 Verriegelungsnuten 44 und 45 vorgesehen, die einander gegenüberliegen. Bei dieser Ausgestaltung liegen die Kipphebel 40 und 41 und mögliche weitere Kipphebel nahezu in einer Ebene.

### Bezugszeichen

- 1: Getriebegehäuse
- 2: Eingangswelle
- 3: Vorgelegewelle
- 4: Abtriebswelle
- 5: Zahnrad auf 2
- 6: Zahnrad auf 3
- 7: Zahnrad auf 3
- 8: Zahnrad auf 3
- 9: Schaltkupplung
- 10: Zahnrad auf 3
- 11: Zahnrad auf 3
- 12: Zahnrad auf 4
- 13: Zahnrad auf 4
- 14: Zahnrad auf 4
- 15: Zahnrad auf 4
- 16: Zahnrad auf 4
- 17: Schaltkupplung
- 18: Schaltkupplung
- 19: Schiebemuffe von 9
- 20: Schiebemuffe von 17
- 21: Schiebemuffe von 18
- 22: Gleitsteine
- 23: Schaltschwinge von 9
- 24: Schaltschwinge von 17
- 25: Schaltschwinge von 18
- 26: Schwenklager von 23 bis 25
- 27: zentrale Wähl- und Schaltwelle
- 28: Schaltfinger auf 27
- 29: Verriegelungsschwinge auf 23
- 30: Verriegelungsschwinge auf 24
- 31: Verriegelungsschwinge auf 25
- 32: Verriegelungsnut
- 33: Sperrnocken
- 34: Kipphebel
- 34A: Schenkel von 34
- 35: Kipphebel
- 35A: Schenkel von 35
- 36: Schwenkachsen von 34 und 35
- 37: Schubstange
- 38: Langloch
- 39: Langloch
- 40: Kipphebel
- 40A: Schenkel von 40
- 41: Kipphebel
- 41A: Schenkel von 41
- 42: Schubstange
- 43: Verriegelungsschwinge
- 44: Verriegelungsnut
- 45: Verriegelungsnut

## Patentansprüche

1. Schalteinrichtung eines Kraftfahrzeuggetriebes mit mehr als zwei in Schiebemuffen (19, 20 und 21) eingreifenden gabelförmigen Schaltelementen, vorzugsweise Schaltschwingen (23, 24 und 25), welche über zumindest eine Schaltwelle (27) um parallele Schwenklager (26) aus ihrer Neutralstellung in Schaltstellungen verschwenkbar sind, wobei ortsfest im Getriebegehäuse angeordnete Verriegelungsmittel derart mit Verriegelungsnuten (32; 44, 45), die in an den Schaltschwingen (23, 24 und 25) befestigten Verriegelungsschwingen (29, 30, 31; 43) ausgebildet sind, zusammenwirken, daß bei Verschwenkung einer Schaltschwinge (23, 24 oder 25) in eine Schaltstellung die übrigen Schaltschwingen (23, 24 oder 25) in ihrer Neutralstellung verriegelt sind, dadurch **gekennzeichnet**, daß zwischen den Schaltschwingen (23, 24 und 25) jeweils ein parallel zum Schwenklager (26) im Getriebegehäuse (1) gelagerter, zweiarmiger Kipphebel (34, 35; 40, 41) angeordnet ist, der über endseitige Sperrnocken (33) in die Verriegelungsnuten (32; 44, 45) eingreift, und daß einander zugewandte Schenkel (34A und 35A; 40A und 41A) der Kipphebel (34 und 35; 40 und 41) mittels Übertragungsglieder miteinander verbunden sind.

2. Schalteinrichtung eines Kraftfahrzeuggetriebes nach Anspruch 1, dadurch **gekennzeichnet**, daß die Verriegelungsschwinge (30; 43) einer Schaltschwinge (24), an der zwei Kipphebel (34 und 35; 40 und 41) angreifen, zwei gegenläufige Verriegelungsnuten (32; 44 und 45) aufweist.

3. Schalteinrichtung eines Kraftfahrzeuggetriebes nach Anspruch 2, dadurch **gekennzeichnet**, daß die Verriegelungsnuten (32; 44 und 45) beiderseits des Schwenklagers (26) angeordnet sind.

4. Schalteinrichtung eines Kraftfahrzeuggetriebes nach Anspruch 2, dadurch **gekennzeichnet**, daß die Verriegelungsnuten (44 und 45) einerseits des Schwenklagers (26) angeordnet sind.

5. Schalteinrichtung eines Kraftfahrzeuggetriebes nach Anspruch 1, dadurch **gekennzeichnet**, daß das Übertragungsglied als eine an den beiden einander zugewandten Schenkel (34A und 35A; 40A und 41A) der beiden Kipphebel (34 und 35; 40 und 41) angelenkte Schubstange (37; 42) ausgebildet ist.

6. Schalteinrichtung eines Kraftfahrzeuggetriebes nach Anspruch 5, dadurch **gekennzeichnet**, daß die Schubstange (37; 42) an zumindest einem der Schenkel (34A, 35A; 40A, 41A) über ein Langloch (38) befestigt ist.

7. Schalteinrichtung eines Kraftfahrzeuggetriebes nach Anspruch 5, dadurch **gekennzeichnet,** daß die Schubstange (37) über ein Langloch (39) am Schwenklager (26) der Schaltschwinge (24) geführt ist.

## Claims

1. Gear change device of a motor vehicle gear unit, having more than two fork-like gear change elements, preferably gear change levers (23, 24 and 25), which engage into sliding sleeves (19, 20 and 21) and may be swivelled by means of at least one operating shaft (27) about parallel swivel bearings (26) out of their neutral position into operating positions, wherein locking means disposed in a fixed manner in the gearbox cooperate with locking grooves (32; 44, 45), which are formed in locking levers (29, 30, 31; 43) fastened to the gear change levers (23, 24 and 25), in such a way that, upon swivelling of one gear change lever (23, 24 or 25) into an operating position, the remaining gear change levers (23, 24 or 25) are locked in their neutral position, characterized in that a two-armed rocker (34, 35; 40, 41) supported parallel to the swivel bearing (26) in the gearbox (1) is disposed between each of the gear change levers (23, 24 and 25) and engages via locking cams (33) disposed at either end into the locking grooves (32; 44, 45), and that opposing limbs (34A and 35A; 40A and 41A) of the rockers (34 and 35; 40 and 41) are connected to one another by transmission members.

2. Gear change device of a motor vehicle gear unit according to claim 1, characterized in that the locking lever (30; 43) of a gear change lever (24), upon which two rockers (34 and 35; 40 and 41) act, has two locking grooves (32; 44 and 45) extending in opposite directions.

3. Gear change device of a motor vehicle gear unit according to claim 2, characterized in that the locking grooves (32; 44 and 45) are disposed on either side of the swivel bearing (26).

4. Gear change device of a motor vehicle gear unit according to claim 2, characterized in that the locking grooves (44 and 45) are disposed on one side of the swivel bearing (26).

5. Gear change device of a motor vehicle gear unit according to claim 1, characterized in that the transmission member takes the form of a push rod (37; 42) which is hinged on the two opposing limbs (34A and 35A; 40A and 41A) of the two rockers (34 and 35; 40 and 41).

6. Gear change device of a motor vehicle gear unit according to claim 5, characterized in that the push rod (37; 42) is fastened to at least one of the limbs (34A, 35A; 40A, 41A) via an oblong hole (38).

7. Gear change device of a motor vehicle gear unit according to claim 5, characterized in that the push rod (37) is guided via an oblong hole (39) on the swivel bearing (26) of the gear change lever (24).

## Revendications

1. Dispositif de changement de vitesses dans une boîte de vitesses de véhicule à moteur, comportant plus de deux éléments de commande en forme de fourchettes, de préférence des leviers oscillants (23, 24 et 25), qui attaquent des manchons baladeurs (19, 20 et 21) et qu'on peut faire pivoter au moyen d'au moins un arbre de commande (27) autour de paliers pivotants parallèles (26) de leur position neutre à des positions d'enclenchement, et dans lequel des moyens de verrouillage disposés de manière stationnaire dans le carter de boîte coopèrent avec des encoches de verrouillage (32; 44, 45) ménagées sur des éléments de verrouillage (29, 30, 31; 43) fixés aux leviers oscillants (23, 24 et 25), de telle manière que lorsqu'un levier oscillant (23, 24 ou 25) pivote jusqu'à une position d'enclenchement, les autres leviers oscillants (23, 24 ou 25) sont verrouillés dans leur position neutre, **caractérisé** en ce qu'il comporte entre chaque paire de leviers oscillants (23, 24 et 25) un levier culbuteur à deux bras (34, 35; 40, 41), monte dans le carter (1) sur un palier parallèle au palier pivotant (26) et s'engageant dans les encoches de verrouillage (32; 44, 45) par des ergots terminaux (33), et en ce que des branches mutuellement adjacentes (34A et 35A; 40A et 41A) des leviers culbuteurs (34 et 35; 40 et 41) sont reliées l'une à l'autre au moyen d'éléments de transmission.

2. Dispositif selon la revendication 1, **caractérisé** en ce qu'un élément de verrouillage (30; 43) d'un levier oscillant (24) qui est attaqué par deux leviers culbuteurs (34 et 35; 40 et 41) comporte deux encoches de verrouillage opposées (32; 44 et 45).

3. Dispositif selon la revendication 2, **caractérisé** en ce que lesdites encoches de verrouillage (32; 44 et 45) sont disposées des deux côtés du palier pivotant (26).

4. Dispositif selon la revendication 2, **caractérisé** en ce que lesdites encoches de verrouillage (44 et 45) sont disposées d'un seul côté du palier pivotant (26).

5. Dispositif selon la revendication 1, **caractérisé** en ce que l'élément de transmission est formé par une bielle (37; 42) qui est articulée aux deux branches mutuellement adjacentes (34A et 35A; 40A et 41A) des deux leviers culbuteurs (34 et 35; 40 et 41).

6. Dispositif selon la revendication 5, **caractérisé** en ce que la bielle (37; 42) est raccordée à au moins l'une desdites branches (34A, 35A; 40A, 41A) au moyen d'un trou oblong (38).

7. Dispositif selon la revendication 5, **caractérisé** en ce que la bielle (37) est guidée au moyen d'un trou oblong (39) sur le palier pivotant (26) du levier oscillant (24).
